# EUROPEAN PATENT APPLICATION

(11) **EP 3 499 837 A1**
(43) Date of publication of application: **19.06.2019**
(21) Application number: 18188422.2
(22) Date of filing: 10.08.2018
(51) Int. Cl.: H04L 29/06

(54) **OT SYSTEM MONITORING METHOD, APPARATUS, SYSTEM, AND STORAGE MEDIUM**

(30) Priority: 13.12.2017 CN 201711329002
(71) Applicant: Siemens Aktiengesellschaft, 80333 München (DE)
(72) Inventor: TANG, Wen, Beijing, 100102 (CN)
(74) Representative: Isarpatent

(57) **Abstract**

The present invention relates to the field of industrial security technologies, and in particular, to an operational technology (OT) system monitoring method, apparatus, and system, and a storage medium, so as to improve visibility of an OT system, thereby effectively preventing a security risk. Embodiments of the present invention provide an OT monitoring system, including: at least one network sensor, configured to: obtain at least one data packet transmitted in an OT system and send the at least one data packet to an OT monitoring apparatus; and the OT monitoring apparatus, configured to: extract, from the obtained at least one data packet, information about at least one asset included in the OT system; and provide a first application programming interface (API) according to the extracted information about the at least one asset, where when the first API is invoked, an asset directory of the OT system is generated; or determine an asset directory of the OT system according to the extracted information about the at least one asset. The asset directory of the OT system can improve visibility of the OT system, so that a security risk is more accurately located.

## Description

### BACKGROUND

### Technical Field

The present invention relates to the field of industrial security technologies, and in particular, to an operational technology (OT) system monitoring method, apparatus, and system, and a storage medium.

### Related Art

An OT system, which may also be referred to as an industrial control system (ICS) is used to implement automatic control in an industrial process. An OT system may be a wind power generation system, an automobile manufacturing workshop, a pharmaceutical factory, a wastewater treatment system for a city, or the like.

A conventional OT system uses a closed design, and it is very difficult for a network attack to threaten the OT system. However, with the development of automatic manufacturing and process control technologies, OT systems widely use an information technology (IT), and are no longer enclosed systems, but for current OT systems, there is a lack of a perfect security monitoring mechanism for discovering in time a security risk that the OT systems face.

Complexity and variability of an OT system increase a difficulty in security monitoring. How to perform effective security monitoring on a complex and dynamically changing OT system becomes a problem urgently needing to be resolved at present.

### SUMMARY

To better monitor an OT system and accurately locate a security risk, first, visibility of the OT system needs to be improved. Embodiments of the present invention provide an OT system monitoring method, apparatus, and system, and a storage medium, so as to improve visibility of an OT system, thereby better monitoring the OT system, and effectively preventing a security risk.

According to a first aspect, an OT monitoring method is provided. The method may be performed by an OT monitoring apparatus provided in an embodiment of the present invention. In the method, first, at least one data packet transmitted in an OT system is obtained; then, information about at least one asset included in the OT system is extracted from the obtained at least one data packet; and finally, an asset directory of the OT system is determined according to the extracted information about the at least one asset. The asset directory of the OT system can improve visibility of the OT system, so that a security risk is more accurately located. The asset of the OT system may include, but is not limited, to various devices, software, or programs in the OT system, for example, network devices such as an industrial controller, an industrial host, a router and a switch, and industrial software.

Optionally, network information of the at least one asset is extracted from a transport layer header of the obtained at least one data packet, and it is determined that the asset directory includes the network information of the at least one asset. In this way, the asset directory includes the network information of the asset, to facilitate locating of a security risk in a network.

Optionally, the obtained at least one data packet is classified according to an industrial protocol; and for each industrial protocol used for classification, asset description information of an involved asset is extracted from a data payload of the industrial protocol in a data packet using the industrial protocol; and it is determined that the asset directory includes asset description information of the at least one asset. The data packet is classified according to the industrial protocol; an in-depth analysis may be performed on a data payload of an industrial protocol in the data packet, to obtain the asset description information of the asset; and the asset description information is placed in the asset directory, so that the visibility of the OT system can be further improved.

Optionally, a network connection relationship of the at least one asset included in the OT system may be further determined according to the obtained at least one data packet; and a network topology of the OT system is determined according to the determined network connection relationship of the at least one asset. In this way, a solution for obtaining the network topology of the OT system is provided.

Further, for each of at least one subnet of the OT system, a data packet in the subnet is obtained; an asset included in the subnet is determined according to the data packet obtained from each of the at least one subnet; and further, it is determined that the network topology of the OT system includes information about the at least one subnet. The information about the subnet is included in the network topology, so that a locating range can be further narrowed down when a network risk occurs.

Optionally, there is a plurality of assets, and in the method, communication information of the at least one asset may be further extracted from the obtained at least one data packet; and an asset feature of the at least one asset is determined according to the determined communication information of the at least one asset, and a change in the asset feature of the at least one asset in the OT system is determined according to the determined communication information of the at least one asset. In this way, a change in the OT system can be monitored, to facilitate rapid discovery of an abnormality that may exist in the OT system.

Optionally, in the method, the obtained at least one data packet may be further classified according to an industrial protocol; and for each industrial protocol used for classification, operation information for an involved asset is extracted from a data payload of the industrial protocol in a data packet using the industrial protocol; and an operation for the OT system is determined according to the extracted operation information. In this way, the operation for the OT system can be monitored, and an abnormal operation for the OT system can be discovered in time.

According to a second aspect, an OT monitoring method is provided. The method may be performed by an OT monitoring apparatus provided in an embodiment of the present invention. In the method, first, at least one data packet transmitted in an OT system is obtained; then, information about at least one asset included in the OT system is extracted from the obtained at least one data packet; and finally, a first application programming interface (API) is provided according to the extracted information about the at least one asset, where the first API is configured to be invoked to generate an asset directory of the OT system. The asset directory of the OT system can improve visibility of the OT system, so that a security risk is more accurately located.

Optionally, network information of the at least one asset is extracted from a transport layer header of the obtained at least one data packet; and the first API is provided, so that when the first API is invoked, information about an asset in the generated asset directory of the OT system includes network information of the asset. In this way, the asset directory includes the network information of the asset, to facilitate locating of a security risk in a network.

Optionally, the obtained at least one data packet is classified according to an industrial protocol; and for each industrial protocol used for classification, asset description information of an involved asset is extracted from a data payload of the industrial protocol in a data packet using the industrial protocol; and the first API is provided, so that when the first API is invoked, information about an asset in the generated asset directory of the OT system includes asset description information of the asset. The data packet is classified according to the industrial protocol; an in-depth analysis may be performed on a data payload of an industrial protocol in the data packet, to obtain the asset description information of the asset; and the asset description information is placed in the asset directory, so that the visibility of the OT system can be further improved.

Optionally, a network connection relationship of the at least one asset included in the OT system may be further determined according to the obtained at least one data packet; and a second API is provided according to the determined network connection relationship of the at least one asset, where the second API is configured to be invoked to generate a network topology of the OT system. In this way, a solution for obtaining the network topology of the OT system is provided.

Further, for each of at least one subnet of the OT system, a data packet in the subnet is obtained; an asset included in the subnet is determined according to the data packet obtained from each of the at least one subnet; and further, the second API is provided, so that when the second API is invoked, the generated network topology of the OT system includes information about the at least one subnet. The information about the subnet is included in the network topology, so that a locating range can be further narrowed down when a network risk occurs.

Optionally, there is a plurality of assets, and in the method, communication information of the at least one asset may be further extracted from the obtained at least one data packet; and a third API is provided according to the determined communication information of the at least one asset, where the third API is configured to be invoked to determine an asset feature of the at least one asset in the OT system, and the third API is further configured to be invoked to determine a change that the OT system violates the determined asset feature of the at least one asset. In this way, a change in the OT system can be monitored, to facilitate rapid discovery of an abnormality that may exist in the OT system.

Optionally, in the method, the obtained at least one data packet may be further classified according to an industrial protocol; and for each industrial protocol used for classification, operation information for an involved asset is extracted from a data payload of the industrial protocol in a data packet using the industrial protocol; and a fourth API is provided according to the extracted operation information, where the fourth API is configured to be invoked to determine an operation for the OT system. In this way, the operation for the OT system can be monitored, and an abnormal operation for the OT system can be discovered in time.

According to a third aspect, an OT system monitoring method is provided. The method may be performed by an OT monitoring application apparatus provided in an embodiment of the present invention. In the method, at least one API is invoked; and the at least one API is invoked to implement at least one of the following monitoring items on an OT system: generating an asset directory of the OT system; determining a network topology of the OT system; determining an asset feature of at least one asset in the OT system; determining a change in the asset feature of the at least one asset in the OT system; and determining an operation for the OT system. In this way, for example, an asset directory, a network topology, an asset feature, and a change in the asset feature of an OT system, and an operation for the OT system can be conveniently obtained by invoking an API, so that visibility of the OT system can be improved, and a security risk can be more accurately located.

According to a fourth aspect, an OT monitoring system is provided. The system may include: at least one network sensor, configured to: obtain at least one data packet transmitted in an OT system and send the at least one data packet to an OT monitoring apparatus; and the OT monitoring apparatus, configured to: obtain the at least one data packet from the at least one network sensor; extract, from the obtained at least one data packet, information about at least one asset included in the OT system; and provide a first API according to the extracted information about the at least one asset, where the first API is configured to be invoked to generate an asset directory of the OT system; or determine an asset directory of the OT system according to the extracted information about the at least one asset. The asset directory of the OT system can improve visibility of the OT system, so that a security risk is more accurately located.

Optionally, network information of the asset may be obtained from a transport layer header of the captured data packet; and the captured data packet is classified according to an industrial protocol, and asset description information is obtained from a data payload of the industrial protocol. The network information and the asset description information are provided in the asset directory of the OT system, so that visibility of the OT system can be further improved.

Optionally, a network topology of the OT system may be further determined; a subnet to which an asset belongs may be determined by identifying a subnet identifier for network traffic; and a subnet to which an asset belongs is identified in the network topology of the OT system, so that when a security risk occurs in the OT system, the risk can be more accurately located.

Optionally, an asset feature of the asset may be further determined according to communication information of assets, to determine a change in the OT system according to the communication information, and discover, in time, a change in the asset feature of the OT system and a security risk that may exist.

Optionally, by means of the embodiments of the present invention, the captured data packet may be further classified according to an industrial protocol; and for different industrial protocols, operation information for the asset is extracted from a data payload of the industrial protocol, to determine an operation for the OT system. A dangerous operation for the OT system can be discovered in time.

According to a fifth aspect, an OT monitoring apparatus is provided. The apparatus may be configured to perform the method according to any one of the first aspect or possible implementations of the first aspect. A data obtaining module in the apparatus may be configured to obtain at least one data packet transmitted in an OT system. An information extraction module in the apparatus may be configured to extract, from the at least one data packet obtained by the data obtaining module, information about at least one asset (which may include network information of the asset, asset description information of the asset, and the like) included in the OT system, and the information extraction module may further extract a network connection relationship of the at least one asset, information about a subnet to which the asset belongs, communication information of the at least one asset, operation information for the asset, and the like. A monitoring module in the apparatus is configured to determine an asset directory of the OT system according to the information about the at least one asset extracted by the information extraction module, may be further configured to generate a network topology of the OT system, where optionally, the network topology may include the information about the subnet to which the asset belongs, and may be further configured to determine an asset feature of the asset, a change in the asset feature, and an operation for the OT system. Alternatively, the monitoring module in the apparatus is configured to provide a first API according to the information about the at least one asset extracted by the information extraction module, where the first API is configured to be invoked to generate an asset directory of the OT system, generate a network topology of the OT system, determine an asset feature of the asset and a change in the asset feature, determine an operation for the OT system, and the like.

The asset directory of the OT system can improve visibility of the OT system, so that a security risk is more accurately located. The network information and the asset description information are provided in the asset directory of the OT system, so that visibility of the OT system can be further improved. The network topology of the OT system is determined and the subnet to which the asset belongs is identified in the network topology, so that when a security risk occurs in the OT system, the risk can be more accurately located. A change in the OT system is determined according to the communication information of assets, so that an asset change in the OT system and a security risk that may exist can be discovered in time. The captured data packet is classified according to an industrial protocol; and for different industrial protocols, operation information for the asset is extracted from a data payload of the industrial protocol, to determine an operation for the OT system, so that a dangerous operation for the OT system can be discovered in time.

According to a sixth aspect, an OT monitoring application apparatus is provided, including an API invoking module, configured to invoke at least one API; and an application implementation module, configured to invoke the at least one API to implement at least one of the following monitoring items on an OT system: generating an asset directory of the OT system; determining a network topology of the OT system; determining a logical relationship of at least one asset in the OT system; determining a change in an asset feature of the at least one asset in the OT system; and determining an operation for the OT system. The asset directory of the OT system can improve visibility of the OT system, so that a security risk is more accurately located. The network topology of the OT system is determined, so that when a security risk occurs in the OT system, the risk can be more accurately located. The asset feature of the asset and the change in the asset feature are determined, so that an asset change in the OT system and a security risk that may exist can be discovered in time. The operation for the OT system is determined, so that a dangerous operation for the OT system can be discovered in time.

According to a seventh aspect, an OT monitoring apparatus is provided, including: at least one memory, configured to store machine readable instructions; and at least one processor, configured to invoke the machine readable instructions stored in the at least one memory, to perform the method according to any one of the first aspect or possible implementations of first aspect, or the method according to any one of the second aspect or possible implementations of the second aspect.

According to an eighth aspect, an OT monitoring application apparatus is provided, including: at least one memory, configured to store machine readable instructions; and at least one processor, configured to invoke the machine readable instructions stored in the at least one memory, to perform the method according to the third aspect.

According to a ninth aspect, a machine readable medium is provided, storing machine readable instructions, where when the machine readable instructions are invoked by at least one processor, the method according to any one of the first aspect or possible implementations of the first aspect, the method according to any one of the second aspect or possible implementations of the second aspect, or the method according to the third aspect is performed.

### BRIEF DESCRIPTION OF THE DRAWINGS

FIG. 1 is a schematic diagram of an OT system;
FIG. 2 is a schematic diagram of an OT monitoring system according to an embodiment of the present invention;
FIG. 3 is a schematic structural diagram of a protocol stack of an OT monitoring system according to an embodiment of the present invention;
FIG. 4 is a flowchart of an OT monitoring method according to an embodiment of the present invention;
FIG. 5 is a schematic structural diagram of an OT monitoring apparatus according to an embodiment of the present invention;
FIG. 6 is a schematic structural diagram of another OT monitoring apparatus according to an embodiment of the present invention;
FIG. 7 is a schematic structural diagram of an OT monitoring application apparatus according to an embodiment of the present invention; and
FIG. 8 is another schematic structural diagram of an OT monitoring application apparatus according to an embodiment of the present invention.

**List of reference numerals:**

| | | | | | |
|---|---|---|---|---|---|
| 10: OT system | | 100: Subnet of the OT system 10 | | | 101: Asset |
| 1011: Controller | | 1012: Industrial host | | | 1013: Router or switch |
| 11: OT monitoring system | | 111: Network sensor | | | 112: OT monitoring apparatus |
| 20: At least one data packet transmitted in the OT system 10 | | | 30: Information extracted from the at least one data packet 20 | | |
| 301: Information about the asset in the OT system 10 | | | 302: Network connection relationship of assets in the OT system 10 | | |
| 303: Communication information of the assets in the OT system 10 | | | 304: Operation information for the asset in the OT system 10 | | |
| 401: Asset directory | 402: Network topology of the OT system 10 | | | 4031: Asset feature of the asset in the OT system 10 | |
| 4032: Change in the OT system 10 | | 404: Operation for the OT system 10 | | | |
| 50: OT monitoring system | | 501: Data obtaining layer | | | 502: Data preparation layer |
| 5021: Data filtering module | | 5022: Information extraction module | | | 5023a: Deep packet analytics (DPA) Link Layer Discovery Protocol (LLDP) plug-in |
| 5023b: DPA PN-DCP plug-in | | 5023c: DPA S7Comm plug-in | | | 5023d: Another DPA plug-in |
| 503: Data storage layer | | 504: API | | | 505: Application |
| 5051: Asset directory generation application | | 5052: Network topology discovery application | | | 5053: Change monitoring application |
| 5054: Operation monitoring application | | | | | |
| S401: A network sensor 111 captures at least one data packet 20 transmitted in an OT system 10 | | | | | |
| S402: The network sensor 111 sends the captured data packet 20 to an OT monitoring apparatus 112 | | | | | |
| S403: The OT monitoring apparatus 112 performs data cleansing for the captured data packet 20 | | | | | |
| S404: The OT monitoring apparatus 112 marks an identifier of the network sensor 111 for the data packet 20 | | | | | |
| S405: The OT monitoring apparatus 112 extracts information 30 from the data packet 20 | | | | | |
| S4051: The OT monitoring apparatus 112 classifies the captured data packet 20 according to an industrial protocol | | | | | |
| S4052: The OT monitoring apparatus 112 performs DPA on the classified data packet 20 | | | | | |
| S406: The OT monitoring apparatus 112 stores the extracted information 30 in a database | | | | | |
| S407: The OT monitoring apparatus 112 provides the information 30 to an application 505 by using an API | | | | | |
| S408: The application 505 invokes the API to implement a monitoring function and present a monitoring result | | | | | |
| 1121: Data obtaining module | | 1122: Information extraction module | | | 1123: Monitoring module |
| 1124: At least one memory | | 1125: At least one processor | | | 1126: Display |
| 12: OT monitoring application apparatus | | 121: API Invoking module | | | 122: Application implementation module |
| 123: At least one memory | | 124: At least one processor | | | 125: Display |

### DETAILED DESCRIPTION

As described above, complexity and variability of an OT system increase a difficulty in performing security monitoring on the OT system. In embodiments of the present invention, visibility of an OT system is improved, to improve a monitoring result of the OT system, thereby effectively preventing a security risk. An OT monitoring system captures a data packet transmitted in the OT system, extracts, from the captured data packet, information about at least one asset included in the OT system, and further determines an asset directory of the OT system according to the extracted information about the at least one asset. The asset directory of the OT system can improve visibility of the OT system, so that a security risk is more accurately located.

Network information of the asset may be obtained from a transport layer header of the captured data packet. The captured data packet is classified according to an industrial protocol, and asset description information is obtained from a data payload of the industrial protocol. The network information and the asset description information are provided in the asset directory of the OT system, so that visibility of the OT system can be further improved.

In addition, by means of the embodiments of the present invention, a network topology of the OT system may be further determined; a subnet to which an asset belongs may be determined by identifying a subnet identifier for network traffic; and a subnet to which an asset belongs is identified in the network topology of the OT system, so that when a security risk occurs in the OT system, the risk can be more accurately located.

In addition, by means of the embodiments of the present invention, an asset feature of the asset may be further determined according to communication information of assets, to determine a change in the asset feature of the OT system according to the communication information, and discover, in time, a change in the asset of the OT system and a security risk that may exist.

In addition, by means of the embodiments of the present invention, the captured data packet may be further classified according to an industrial protocol; and for different industrial protocols, operation information for the asset is extracted from a data payload of the industrial protocol, to determine an operation for the OT system. A dangerous operation for the OT system can be discovered in time.

To make the present invention easier to be understood, an OT system and some descriptions in the embodiments of the present invention are explained below. It should be noted that, these explanations should not be construed as a limitation to the protection scope of the present invention.

### 1. OT system

In an OT, a physical device in an enterprise, a process, and an event are directly monitored and/or controlled by using hardware and software, to implement detection or control. In an OT system, a computer is used to monitor or change a physical state of a system. Examples of the OT system include: a supervisory control and data acquisition (SCADA) system, a distributed control system (DCS), a computer numerical control (CNC) system (including a computerized mechanical tool), and a scientific device (for example, a digital oscilloscope).

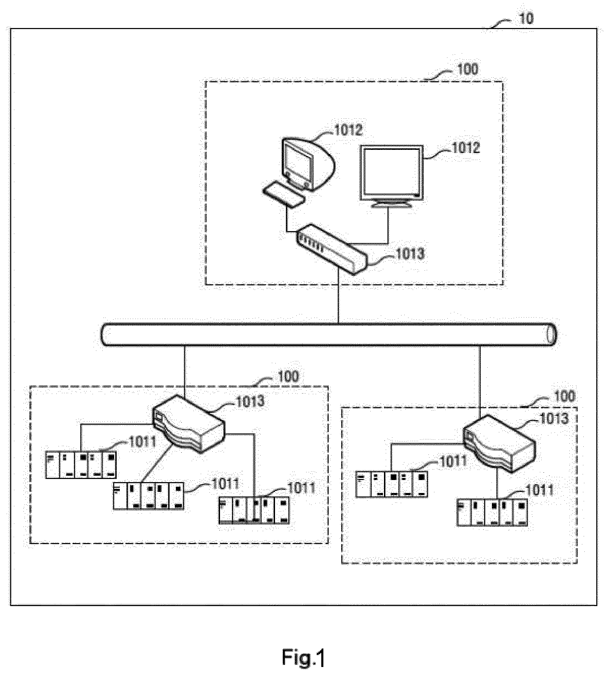

FIG. 1 is a schematic diagram of an OT system 10. As shown in FIG. 1, the OT system 10 may include, but is not limited to, the following devices: 1) at least one industrial controller 1011, 2) at least one industrial host 1012, and 3) at least one network device 1013.

### 1) The at least one industrial controller 1011

An industrial controller 1011 may be a programmable logical controller (PLC), a DCS controller, an RTU, or the like.

### 2) The at least one industrial host 1012

The industrial host 1012 may include a host computer such as a workstation or a server implemented based on a personal computer (PC), for example, an engineer station, an operator station, or a server. The industrial host 1012 may further include a human machine interface (HMI). In an ICS, an industrial host monitors and controls the industrial controller 1011 by using the industrial Ethernet, for example, controls the industrial controller 1011 to read data from a field device (for example, read a status parameter of the field device from a sensor), stores the data in a historical database, sends a control command to the industrial controller 1011 according to an instruction of an operator or according to a preset control program or preset logic, and the like. The engineer station may also configure the industrial controller 1011.

### 3) The at least one network device 1013

The network device 1013 forms an industrial control network, to connect to each industrial controller 1011 and each industrial host 1012. Currently, a growing quantity of industrial control networks are implemented based on the industrial Ethernet, and communication in the industrial Ethernet may be based on the Transmission Control Protocol (TCP), the User Datagram Protocol (UDP), the Internet Protocol (IP) or the like. The network device 1013 may include, but is not limited to, a router, a switch, or the like.

The devices included in the OT system 10, for example, the industrial controller 1011, the industrial host 1012, and the network device 1013, may also be referred to as assets in the OT system 10. In addition, assets may further include some software, programs, and the like run in the OT system 10. Some assets may belong to a same subnet 100, as shown in FIG. 1.

### 2. Network monitoring

Network monitoring methods or tools may include, but are not limited to, the following two types: active network monitoring and passive network monitoring. In active network monitoring, detection network traffic is sent to a network, and a feedback of the network is measured or monitored. Active network monitoring is like a controlled experiment, and is applicable to obtaining data specific to network performance. In passive network monitoring, only network traffic that is already transmitted in a network is monitored, and a network packet is captured by using a device connected to the network, for an analysis.

In the embodiments of the present invention, a network sensor may be deployed to capture network traffic of an OT system, and perform passive network monitoring on the OT system; and running of the OT system is not affected.

### 3. Network traffic capture

Network traffic capture, or referred to as packet capture, is used to obtain a data packet transmitted in a specific network, and a computer program or hardware may be used to translate and record network traffic transmitted in a network or a part of a network. A packet is captured when the packet is transmitted in a network, original data of the packet is decoded as required, and values of different fields in the packet are provided and content of the packet is analyzed. The captured network traffic may include at least one of the following traffic: a data packet transmitted between devices in the network, a data packet entering the network from an external device, and a data packet transmitted from the network to the outside.

For a wired broadcast local area network such as the Ethernet, a token ring network, or a fiber distributed data interface (FDDI) network, depending on a network structure (based on a switch or based on a hub), a separate device may be used to capture all or some of network traffic in the network. A method for deploying a capture device in a network includes, but is not limited to: connecting the capture device to a switched port analyzer (SPAN) port of a switch or a router in the network for performing port mirroring, so that all packets passing through all ports of the switch can be captured. Alternatively, a network tap is used. In this way, the network traffic flows to the network tap from the network. For a wireless local area network, network traffic may be captured on a specific channel, or multiple adapters are used to capture network traffic on several channels.

In some embodiments of the present invention, when network traffic is captured, an entire packet (including a data payload) of a data packet in the network traffic may be captured. An advantage is that, all Ethernet or IP activity information can be extracted from the data packet, for network forensics or a network security analysis. The entire packet of the data packet in the network traffic is captured, to avoid that a data packet cannot be re-obtained due to missing of the data packet. This is more important to a case in which a network behavior cannot be predicted. For example, a network administrator generally does not know a feature and an operation manner of an advanced persistent threat (APT). Consequently, occurrence of an APT cannot be predicted. The entire packet of the data packet transmitted in the network is captured, and further a data analysis is performed, so that missing of information can be avoided, and a feature of the APT can be accurately obtained, to perform risk evaluation and prediction, thereby effectively preventing a network security threat.

In the embodiments of the present invention, a passive network monitoring manner may be used to capture a large quantity of data packets (including a packet header and a data payload) transmitted in an OT system, and extract a large quantity of information from the captured data packets. For example, information is obtained from a TCP header to determine a network topology of the OT system, and identify a service and an operating system run in a network device, and a potential malicious act.

An OT system is relatively vulnerable to a network attack due to an inadequate security risk prevention capability and a relatively long running time. In the embodiments of the present invention, a data packet transmitted in an OT system may be captured, the OT system may be monitored by running various applications, an asset directory of the OT system may be established, a network topology may be discovered, and a change in the system, a network behavior, and an operation for the OT system may be monitored, so that visibility of the OT system can be effectively improved. The passive network monitoring manner may be used to avoid affecting running of the OT system when an additional data packet is input to the OT system.

The following describes the embodiments of the present invention in detail with reference to the accompanying drawings.

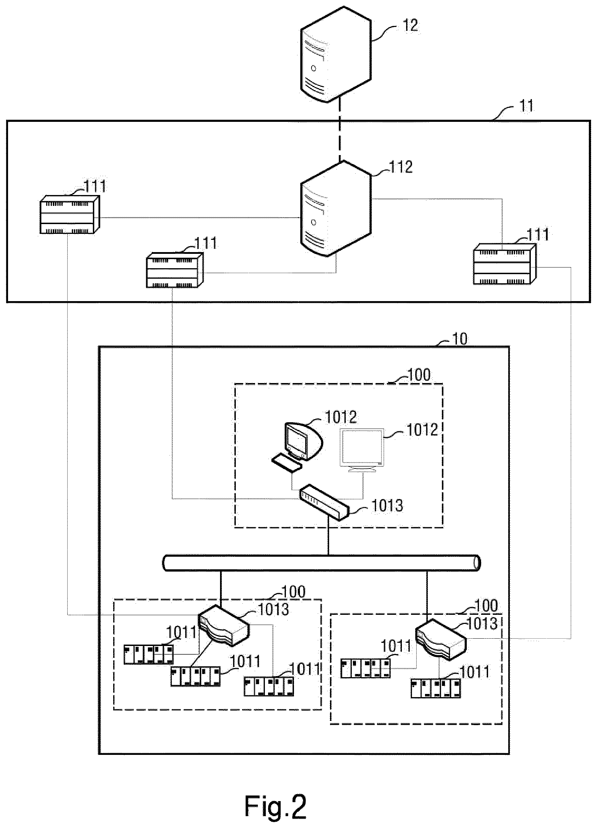

FIG. 2 is a schematic diagram of an OT monitoring system 11 according to an embodiment of the present invention. As shown in FIG. 2, the OT monitoring system 11 may include at least one network sensor 111, and an OT monitoring apparatus 112.

The at least one network sensor 111 may be deployed in each subnet of an OT system 10, and obtain at least one data packet 20 transmitted in the OT system 10. Optionally, the network sensor 111 may obtain all data packets 20 transmitted in the OT system 10, to completely and accurately monitor the OT system 10. The network sensor 111 may organize the received at least one data packet 20 into PCAP data and send the PCAP data to an OT monitoring apparatus 112. In an embodiment of the present invention, the network sensor 111 may obtain the data packet 20 by using a passive network monitoring manner, for example, by performing port mirroring by using a SPAN, or by using a network tap. Use of the network sensor 111 provides a dedicated data packet capture solution applicable to an industrial environment and having low costs, which may be used to capture data packets 20 in different subnets of the OT system 10. A hardware structure of the network sensor 111 may include two network interfaces, where one network interface is configured to capture the data packet 20 from the OT system 10, and the other network interface is configured to forward the captured data packet 20 to the OT monitoring apparatus 112. Use of the two network interfaces can avoid that forwarding of the data packet 20 occupies network bandwidth of the OT system 10, and avoid affecting production and running of the OT system 10.

The OT monitoring apparatus 112 is configured to: receive the data packet 20 from the network sensor 111, and prepare and analyze data. The OT monitoring apparatus 112 may provide a service to each network sensor 111, so that the network sensor 111 uploads data packets 20 captured from different subnets of the OT system 10. In an optional implementation, the OT monitoring apparatus 112 extracts information 30 about the OT monitoring system 11 from the data packet 20, and provides an API externally based on the information 30, to be invoked by a third-party application 12 to monitor the OT system 10. In another optional implementation, the OT monitoring apparatus 112 monitors the OT system 10 based on the information.

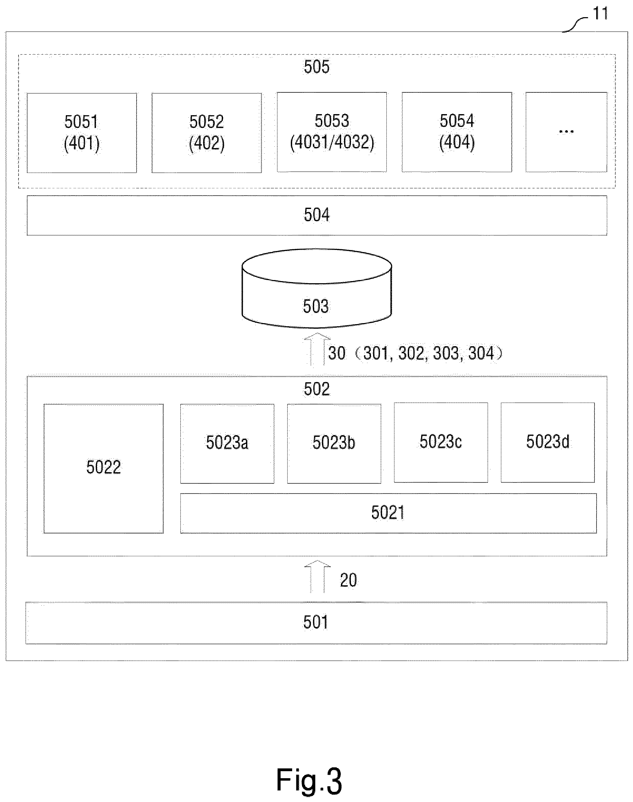

FIG. 3 is a schematic structural diagram of an optional protocol stack of an OT monitoring system 10 according to an embodiment of the present invention. As shown in FIG. 3, the protocol stack may include the following five layers: a data obtaining layer 501, a data preparation layer 502, a data storage layer 503, an API 504, and an application 505.

### The data obtaining layer 501

The layer is configured to obtain a data packet 20 transmitted in the OT system 10.

The layer may include a convergence function in a network sensor 111 and an OT monitoring apparatus 112, and is configured to converge data packets 20 in a PCAP format from different network sensors 111. The data obtaining layer 501 may further obtain a data packet 20 from each subnet 100 of the OT system 10, combine the data packets 20 together, and perform data cleansing, for example, remove redundant data packets 20 captured by different network sensors 111, and mark an identifier of the network sensor 111 for the data packet 20, for next-step processing.

### The data preparation layer 502

The layer mainly includes the following several parts: 1) a data filtering module 5021, 2) an information extraction module 5022, and 3) a DPA plug-in.

### 1) The data filtering module 5021

The module is configured to classify original data packets 20 into different packet sequences according to protocols, and data packets 20 of a same protocol or a similar protocol are classified into one sequence. For example, all data packets 20 using the LLDP are classified into one sequence, and all data packets using the S7Comm are classified into another sequence.

### 2) The information extraction module 5022

The module may be configured to obtain information about a general IT protocol from a frame or a packet of the data packet 20, for example, obtain the following information from a Medium Access Control (MAC)/IP/TCP/UDP header of the data packet 20: a MAC address, an IP address, a TCP/UDP port number, or a TCP flag.

The module may further derive a network connection relationship 302 of assets in the OT system 10 based on deployment of the network sensor 111. For example, data packets 20 from a same network sensor 111 may come from a same router or switch 1013, that is, come from a same subnet.

The module may further monitor a network behavior of the OT system 10 based on knowledge of a network protocol. For example, when a TCP packet passes through a router, the router decreases a value of a TTL field by 1. Therefore, when the module monitors a phenomenon that the value of the TTL field is decreased by 1, it may be determined that the TCP packet passes through a router rather than a switch.

The module may further perform further derivation based on basic knowledge of a network. For example, if assets 101 in a group all have a prefix such as 192.168.0.*, it may be determined that an address of a subnet to which the assets 101 in the group belong may be 192.168.0.0/24.

### 3) The DPA plug-in

The DPA plug-in is configured to extract information from a data payload of a data packet 20 of a specified protocol, and may be further configured to associate various extracted information, to generate valuable information for the OT system 10. The DPA plug-in may be classified, according to a protocol part processed by the DPA plug-in, into: a DPA LLDP plug-in 5023a, a DPA PN-DCP plug-in 5023b, a DPA S7Comm plug-in 5023c, or another DPA 5023d plug-in (configured to process another protocol). The information obtained by the DPA plug-in includes, but is not limited to, information 301 about the asset, for example, an asset name, a hardware version or a firmware version. The DPA plug-in may extract the information from data payloads of various industrial protocols such as the LLDP and the PROFINET-DCP, and extract communication information 303 of the assets in the OT system 10, and operation information 304 for the asset in the OT system 10.

### The data storage layer 503

The data storage layer 503 is configured to store information 30 prepared by the data preparation layer 502, which may include the information 301 about the asset in the OT system 10, the network connection relationship 302 of the assets in the OT system 10, the communication information 303 of the assets in the OT system 10, and the operation information 304 for the asset in the OT system 10. An information storage form includes, but is not limited to, storage in a database, storage in a file, or buffering.

### API 504

APIs are provided to different applications 505 based on the various information 30 stored in the data storage layer 503.

### The application 505

The information 30 about the OT system 10 is obtained by invoking the API, and an implementable application 505 includes, but is not limited to:
1) an asset directory generation application 5051 (generating an asset directory 401);
2) a network topology discovery application 5052 (determining a network topology 402 of the OT system 10);
3) a change monitoring application 5053 (determining an asset feature 4031 of the asset in the OT system 10 and a change in the OT system 10); and
4) an operation monitoring application 5054 (determining an operation for the OT system 10).

In addition, a network load monitoring application, a network behavior monitoring application, an industrial application monitoring application, a threat monitoring application, and the like may be further included.

In an optional implementation, in the foregoing structure of the protocol stack, the OT monitoring apparatus 112 implements a data cleansing function and the like of the data obtaining layer 501 (as described above), a function of the data preparation layer 502, a function of the data storage layer 503, and a function of the API 504, to provide the API externally. However, the application 505 is developed and implemented by another third-party device. In another optional implementation, the OT monitoring apparatus 112 provides no API, but implements various applications 505 by itself. For such a manner, the application 505 may be considered as a part of the OT monitoring apparatus 112.

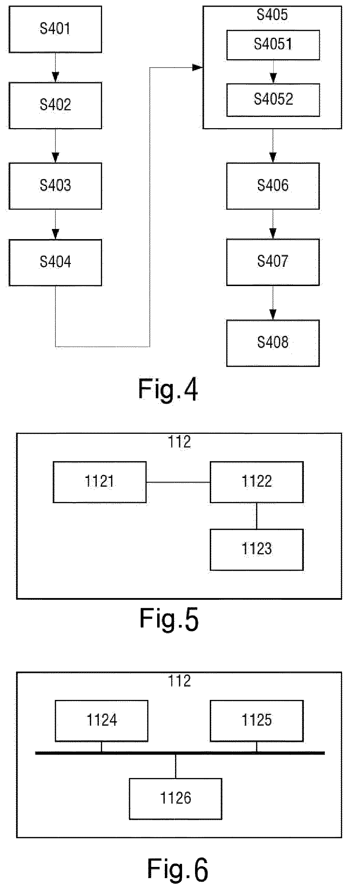

FIG. 4 is a flowchart of an OT monitoring method according to an embodiment of the present invention. As shown in FIG. 4, the method may include the following steps:
S401: A network sensor 111 captures at least one data packet 20 transmitted in an OT system 10.

As described above, the network sensor 111 may be deployed in different subnets of the OT system 10. A SPAN port is configured on a switch or a router in a subnet, or a network tap is deployed on a cable, so that the network sensor 111 can capture the data packet 20 from the OT system 10 by using a passive network monitoring manner. Optionally, the network sensor 111 captures all packets transmitted in the OT system 10.

S402: The network sensor 111 sends the captured data packet 20 to an OT monitoring apparatus 112.

The network sensor 111 may send the captured data packet 20 in a PCAP packet to the OT monitoring apparatus 112. To avoid affecting communication of the OT system 10, the network sensor 111 may send the captured data packet 20 by using a separate network interface. Optionally, the network sensor 111 may further have a local buffering function. When the network sensor 111 is disconnected from the OT monitoring apparatus 112, the network sensor 111 may store a particular quantity of data packets 20, and send the buffered data packets 20 after a connection is resumed.

S403: The OT monitoring apparatus 112 performs data cleansing for the captured data packet 20.

After obtaining the data packet 20 from the network sensor 111, the OT monitoring apparatus 112 may perform data cleansing first, which includes, but is not limited to, removing an irrelevant data packet 20, removing a redundant data packet 20, combining repeatedly sent data packets 20, and the like.

S404: The OT monitoring apparatus 112 marks an identifier of the network sensor 111 for the data packet 20.

S405: The OT monitoring apparatus 112 extracts information 30 from the data packet 20.

In this step, the data packet 20 that is cleansed and for which the identifier of the network sensor 111 is marked is analyzed to extract each asset 101 related to the OT system 10 and information 30 about a network. The information 30 may include: network information extracted from an Ethernet frame or an IT/TCP/TDP packet header, for example, a MAC address, an IP address, a TCP/UDP port number, and a TCP identifier.

In this step, a network connection relationship 302 of the assets in the OT system 10 may be further derived based on deployment of the network sensor 111. For example, data packets 20 from a same network sensor 111 may come from a same router or switch 1013, that is, come from a same subnet.

In this step, a network behavior of the OT system 10 may be further monitored based on knowledge of a network protocol. For example, when a TCP packet passes through a router, the router decreases a value of a TTL field by 1. Therefore, when the module monitors a phenomenon that the value of the TTL field is decreased by 1, it may be determined that the TCP packet passes through a router rather than a switch.

In this step, further derivation may be further performed based on basic knowledge of a network. For example, if assets 101 in a group all have a prefix such as 192.168.0.*, it may be determined that an address of a subnet to which the assets 101 in the group belong may be 192.168.0.0/24.

Optionally, step S405 may include the following sub-steps:
S4051: The OT monitoring apparatus 112 classifies the captured data packet 20 according to an industrial protocol, and classifies the data packet 20 into different sequences or groups.
S4052: The OT monitoring apparatus 112 performs DPA on the classified data packet 20. By means of the DPA, the information may be extracted from a data payload of the industrial protocol, and various extracted information may be further associated to obtain valuable information related to the OT system 10. The extracted information 30 may include, but is not limited to:
   information 301 about the asset in the OT system 10, where the information 301 may be directly extracted from, for example, a data payload of industrial information such as the LLDP or the PROFINET-DCP.
S406: The OT monitoring apparatus 112 stores the extracted information 30 in a database.
S407: The OT monitoring apparatus 112 provides the information 30 to an application 505 by using an API.

An implementation of the API includes, but is not limited to: a RESTful API, an XML-RPC API, or a JSON RPC API.
S408: The application invokes the API to implement a monitoring function and present a monitoring result.

The application 12 can implement the following monitoring function based on the information 30: 1) generation of an asset directory, 2) discovery of a network topology, 3) change monitoring, and 4) operation monitoring.

### 1) Generation of an asset directory

The extracted information 301 about the asset 101 is associated with a MAC address of the asset 101, so that the following features of the asset 101 may be obtained:
the MAC address;
an IP address bound with the MAC address, where for a switch 1013, one IP address may correspond to multiple MAC addresses;
a supplier, which may be obtained from the MAC address of the asset 101 because first 24 bits of the MAC address are used to identify the supplier;
an open port or service of the asset 101, which may be derived from a destination port number of the asset;
a type of the asset 101, which may be extracted from a specified field in the IP/TCP/UDP, for example, a TTL field in an IP packet, an ID field in the IP packet, a TCP window length, an option in TCP SYN and TCP SYN+ACK, and a field in a Dynamic Host Configuration Protocol (DHCP) packet, an Internet Control Message Protocol (ICMP) packet, or a Hypertext Transfer Protocol (HTTP) packet; and
information indicating whether the asset 101 exists, where, for example, when a TCP packet passes through a router, the router decreases a value of a TTL field by 1; therefore, when the module monitors a phenomenon that the value of the TTL field is decreased by 1, it may be determined that the TCP packet passes through a router rather than a switch.

In addition, a host name, a device type, a device identifier, a hardware version, a firmware version, and the like of the asset 101 may be further included, and may be obtained from a data payload of an industrial protocol such as the LLDP, the PROFINET-DCP, the S7Comm, or the OPC UA. It may be determined, according to the information, whether the asset 101 is a workstation, a server, an HMI, an industrial controller, or a switch or a router. Many assets 101 in the OT system broadcast attributes thereof, for example, a device name, an IP address, a device model, and a firmware version may be provided by using a specific packet of the LLDP or the PROFINET-DCP at an Ethernet layer. The OT monitoring apparatus 112 can identify the packets, and extract the foregoing information and record the information in the asset directory 401.

### 2) Discovery of the network topology

The network topology of the OT monitoring system 11 may be obtained by using the following method:
An asset 101 in a same switch or router to which a specific network sensor 111 is connected may be determined according to a data packet 20 from the specific network sensor 111. Generally, in an OT system 10, an industrial host is deployed at a management layer, another industrial controller such as a PLC is deployed at a control layer, and a switch or a router is located between the management layer and the control layer. A network connection relationship 302 of assets 101 may be further obtained, for example, assets belonging to a same subnet 100 are determined based on front parts of IP addresses of the assets 101. Optionally, a switch from which the data packet 20 comes and other assets 101 connected to the switch may be identified according to the network sensor 111 from which the data packet 20 comes. A form of (asset A, asset B) is used to record a connection between the assets, and all connections are stored in one set, to form the network topology 402 of the OT system 10. In addition, when the asset 101 in the OT system 10 changes, a set of a new connection may be generated, and a formation time and an end time of each set are recorded, so that a change in the network topology 402 of the OT system 10 can be traced back.

### 3) Change monitoring

The OT system 10 is continuously monitored, and for example, a time of an asset 101 that newly appears and information about the asset, and expiration information of an old asset (for example, there is no activity in 72 hours) are recorded, so as to monitor a change in the OT system 10.

Generally, an OT system is a system of high certainty, and after the OT system is configured, a communication relationship of assets is fixed. Therefore, long-term monitoring may be performed on communication between the assets in the OT system 10 to identify the relationship of the assets 101, and an abnormality that violates the relationship may be further identified.

### 4) Operation monitoring

A control variable and a value thereof of the asset 101 may be obtained by performing DPA on a data payload of a specific industrial protocol. Therefore, the operation for the OT system 10 may be determined based on the extracted operation information for the asset in the OT system 10. Further, predictive maintenance and a diagnostic analysis may be performed.

The asset directory 401 and the network topology 402 of the OT system 10, the relationship 4031 of the assets, the system change 4032, and the operation for the OT system 10 may be obtained by running the foregoing application. The obtained information may be further displayed, and a display manner includes, but is not limited to:
displaying information about an asset 101 in the asset directory 401 in a form of a list.

The network topology 402 of the OT system 10 is presented in the following layout:
displaying the industrial host 1012 at the top of a screen;
displaying the industrial controller 1011 at the bottom of the screen; and
displaying the router or switch 1013 at the center of the screen, to connect to the industrial host 1012 and the industrial controller 1011.

An evolution process of the network topology 402 of the OT system 10 is displayed. Optionally, a change in the network topology 402 may be marked at a specific time point. A user may select different time points on the screen, and correspondingly, a network topology 402 at the selected time point and a change occurring at the time point are presented. Optionally, the user may add information to the asset directory 401, for example, an asset owner, or a geographical position of an asset.

FIG. 5 is a schematic structural diagram of an OT monitoring apparatus 112 according to an embodiment of the present invention. As shown in FIG. 5, the apparatus 112 may include:
a data obtaining module 1121, configured to obtain at least one data packet 20 transmitted in an OT system 10;
an information extraction module 1122, configured to extract, from the at least one data packet 20 obtained by the data obtaining module 1121, information 301 about at least one asset 101 included in the OT system 10; and
a monitoring module 1123, configured to determine an asset directory 401 of the OT system 10 according to the information 301 about the at least one asset 101 extracted by the information extraction module 1122.

Optionally, the information extraction module 1122 is specifically configured to extract network information of the at least one asset 101 from a transport layer header of the obtained at least one data packet 20; and the monitoring module 1123 is specifically configured to determine that the asset directory 401 includes the network information of the at least one asset 101.

Optionally, the information extraction module 1122 is specifically configured to: classify the obtained at least one data packet 20 according to an industrial protocol; and for each industrial protocol used for classification, extract asset description information of an involved asset 101 from a data payload of the industrial protocol in a data packet 20 using the industrial protocol; and the monitoring module 1123 is specifically configured to determine that the asset directory 401 includes asset description information of the at least one asset 101.

Optionally, the information extraction module 1122 is further configured to determine, according to the at least one data packet 20 obtained by the data obtaining module 1121, a network connection relationship 302 of the at least one asset 101 included in the OT system 10; and the monitoring module 1123 is further configured to determine a network topology 402 of the OT system 10 according to the determined network connection relationship 302 of the at least one asset 101. Further, the data obtaining module 1121 is specifically configured to: for each of at least one subnet 100 of the OT system 10, obtain a data packet 20 in the subnet 100; the information extraction module 1122 is specifically configured to determine, according to the data packet 20 obtained from each of the at least one subnet 100, an asset 101 included in the subnet 100; and the monitoring module 1123 is specifically configured to determine that the network topology 402 of the OT system 10 includes information about the at least one subnet 100.

Optionally, there is a plurality of assets 101, the information extraction module 1122 is further configured to obtain communication information 303 of the at least one asset 101 from the obtained at least one data packet 20; the monitoring module 1123 is further configured to determine an asset feature 4031 of the at least one asset 101 according to the communication information 303 of the at least one asset 101 determined by the information extraction module 1122 (where the asset feature 4031 may be a logical relationship of the at least one asset 101). Further, the monitoring module 1123 is further configured to determine a change 4032 in the asset feature 4031 of the at least one asset 101 in the OT system 10 according to the communication information 303 of the at least one asset 101 determined by the information extraction module 1122 (the change 1032 may be a change that violates the determined logical relationship of the at least one asset 101).

Optionally, the information extraction module 1122 is specifically configured to: classify the obtained at least one data packet 20 according to an industrial protocol; and for each industrial protocol used for classification, extract operation information 304 of an involved asset 101 from a data payload of the industrial protocol in a data packet 20 using the industrial protocol; and the monitoring module 1123 is further configured to determine an operation 404 for the OT system 10 according to the operation information 304 extracted by the information extraction module 1122.

In an optional solution of the OT monitoring apparatus 112, the monitoring module 1123 implements a function of a monitoring application, for example, generating the asset directory and the network topology, and determining the asset feature of the asset, the change in the asset feature, and the operation for the OT system. In another optional implementation, the monitoring module 1123 provides an API externally, to be invoked by an application to implement one or more functions of the foregoing monitoring application. Specifically, the OT monitoring apparatus 112 may include:
a data obtaining module 1121, configured to obtain at least one data packet 20 transmitted in an OT system 10;
an information extraction module 1122, configured to extract, from the at least one data packet 20 obtained by the data obtaining module 1121, information 301 about at least one asset 101 included in the OT system 10; and
a monitoring module 1123, configured to provide a first API according to the information 301 about the at least one asset 101 extracted by the information extraction module 1122, where the first API is configured to be invoked to generate an asset directory 401 of the OT system 10.

Optionally, the information extraction module 1122 is specifically configured to extract network information of the at least one asset 101 from a transport layer header of the obtained at least one data packet 20; and the monitoring module 1123 is specifically configured to provide the first API 101, so that when the first API is invoked, information 30 about the asset 101 in the generated asset directory 401 of the OT system 10 includes the network information of the asset 101.

Optionally, the information extraction module 1122 is specifically configured to: classify, according to an industrial protocol, the at least one data packet 20 obtained by the data obtaining module 1121; and for each industrial protocol used for classification, extract asset description information of an involved asset 101 from a data payload of the industrial protocol in a data packet 20 using the industrial protocol; and the monitoring module 1123 is specifically configured to provide the first API, so that when the first API is invoked, information 30 about the asset 101 in the generated asset directory 401 of the OT system 10 includes asset description information of the asset 101.

Optionally, the information extraction module 1122 is further configured to determine, according to the obtained at least one data packet 20, a network connection relationship 302 of the at least one asset 101 included in the OT system 10; and the monitoring module 1123 is further configured to provide a second API according to the network connection relationship 302 of the at least one asset 101 determined by the information extraction module 1122, where the second API is configured to be invoked to generate a network topology 402 of the OT system 10.

Optionally, the data obtaining module 1121 is specifically configured to: for each of at least one subnet 100 of the OT system 10, obtain a data packet 20 in the subnet 100; the information extraction module 1122 is specifically configured to determine, according to the data packet 20 obtained from each of the at least one subnet 100, an asset 101 included in the subnet 100; and the monitoring module 1123 is specifically configured to provide the second API, so that when the second API is invoked, the generated network topology 402 of the OT system 10 includes information about the at least one subnet 100.

Optionally, there is a plurality of assets 101, and the information extraction module 1122 is further configured to extract communication information 303 of the at least one asset 101 from the at least one data packet 20 obtained by the data obtaining module 1121; the monitoring module 1123 is further configured to provide a third API according to the communication information 303 of the at least one asset 101 determined by the information extraction module 1122, where the third API is configured to be invoked to determine an asset feature 4031 of the at least one asset 101 in the OT system 10. Further, the monitoring module 1123 is further configured to provide the third API, where the third API is configured to be invoked to determine a change 4032 that the OT system 10 violates the determined asset feature 4031 of the at least one asset 101.

Optionally, the information extraction module 1122 is specifically configured to: classify, according to an industrial protocol, the at least one data packet 20 obtained by the data obtaining module 1121; and for each industrial protocol used for classification, extract operation information 304 for an involved asset 101 from a data payload of the industrial protocol in a data packet 20 using the industrial protocol; and the monitoring module 1123 is further configured to provide a fourth API according to the operation information 304 extracted by the information extraction module 1122, where the fourth API is configured to be invoked to determine an operation 404 for the OT system 10.

FIG. 6 is another schematic structural diagram of an OT monitoring apparatus 112 according to an embodiment of the present invention. In the structure, the OT monitoring apparatus 112 includes at least one memory 1124, configured to store machine readable instructions; and at least one processor 1125, configured to invoke the machine readable instructions stored in the at least one memory 1124, to perform the method performed by the OT monitoring apparatus 112 in the embodiments of the present invention. Optionally, the structure may further include a display 1126, configured to display a result of monitoring an OT system 10 by the OT monitoring apparatus 112, for example, an asset directory, a network topology, a change in a relationship of assets, and an operation for the OT system 10. The at least one processor 1125, the at least one memory 1124, and the display 1126 may be connected by using a bus.

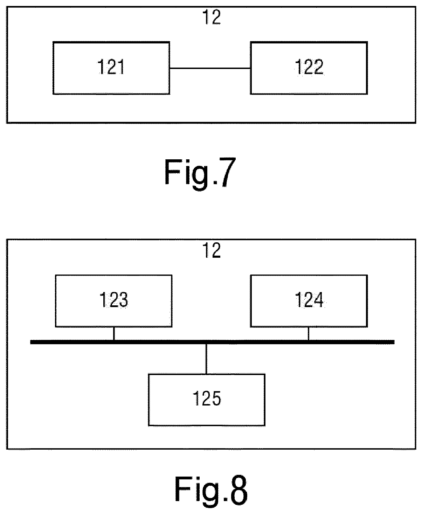

FIG. 7 is a schematic structural diagram of an OT monitoring application apparatus 12 according to an embodiment of the present invention. In the structure, the OT monitoring application apparatus 12 may include: an API invoking module 121, configured to invoke at least one API 504; and an application implementation module 122, configured to invoke the at least one API 504 to implement at least one of the following monitoring items on an OT system 10: generating an asset directory 401 of the OT system 10; determining a network topology 402 of the OT system 10; determining an asset feature 4031 of at least one asset 101 in the OT system 10; determining a change 4032 in the asset feature 4031 of the at least one asset 101 in the OT system 10; and determining an operation 404 for the OT system 10.

FIG. 8 is another schematic structural diagram of an OT monitoring application apparatus 12 according to an embodiment of the present invention. In the structure, the OT monitoring application apparatus 12 includes at least one memory 123, configured to store machine readable instructions; and at least one processor 124, configured to invoke the machine readable instructions stored in the at least one memory 123, to perform the method performed by the OT monitoring application apparatus 12 in the embodiments of the present invention. Optionally, the structure may further include a display 125, configured to display a monitoring result of an OT system 10, for example, an asset directory, a network topology, a change in an asset feature, and an operation for the OT system 10. The at least one processor 124, the at least one memory 123, and the display 125 may be connected by using a bus.

An embodiment of the present invention further provides a storage medium. The storage medium may store machine readable instructions. When the machine readable instructions are invoked by a processor, the OT monitoring method provided in the embodiments of the present invention can be performed. The storage medium may be a floppy disk, a hard disk, a memory, a magneto-optical disk, an optical disk, a magnetic tape, or a non-volatile storage card. The storage medium may also be a storage resource on a remote server (for example, an application server, and the remote server may be deployed on cloud), and the OT monitoring apparatus 112 provided in the embodiments of the present invention may download the machine readable instructions from the remote server, and runs the machine readable instructions on a local device, or the machine readable instructions may be run in a form of a microservice.

It should be noted that, steps and modules in the foregoing procedures and various system structural diagrams are not all necessary, and some steps or modules may be ignored according to an actual requirement. An execution order of the steps is not fixed, and may be adjusted as required. System structures described in the foregoing embodiments may be physical structures or may be logical structures, that is, some modules may be implemented by using a same physical entity or some modules may be implemented by using multiple physical entities or may be jointly implemented by some components in multiple independent devices.

In the foregoing embodiments, hardware units may be implemented mechanically or electrically. For example, a hardware unit may include a permanent dedicated circuit or logic (for example, a dedicated process, an FPGA, or an ASIC) to complete corresponding operations. The hardware unit may further include programmable logic or a programmable circuit (for example, a general-purpose processor or another programmable processor), and corresponding operations may be completed by using software that is temporarily set. A specific implementation (a mechanical manner, a dedicated persistent circuit, or a circuit that is temporarily set) may be determined by considering costs and a time.

The present invention is presented and described in detail above by using the accompanying drawings and the preferred embodiments; however, the present invention is not limited to the disclosed embodiments. Based on the foregoing multiple embodiments, a person skilled in the art may know that, more embodiments of the present invention can be obtained by combining code review means in the foregoing different embodiments, and these embodiments should also fall within the protection scope of the present invention.

## Claims

1. An operational technology (OT) monitoring method, comprising:
obtaining at least one data packet (20) transmitted in an OT system (10);
extracting, from the obtained at least one data packet (20), information (301) about at least one asset (101) comprised in the OT system (10); and
determining an asset directory (401) of the OT system (10) according to the extracted information (301) about the at least one asset (101).

2. The method according to claim 1, wherein
the extracting, from the obtained at least one data packet (20), information (301) about at least one asset (101) comprised in the OT system (10) comprises: extracting network information of the at least one asset (101) from a transport layer header of the obtained at least one data packet (20); and
the determining an asset directory (401) of the OT system (10) according to the extracted information (301) about the at least one asset (101) comprises: determining that the asset directory (401) comprises the network information of the at least one asset (101).

3. The method according to claim 1, wherein
the extracting, from the obtained at least one data packet (20), information (301) about at least one asset (101) comprised in the OT system (10) comprises:
classifying the obtained at least one data packet (20) according to an industrial protocol; and
for each industrial protocol used for classification, extracting asset description information of an involved asset (101) from a data payload of the industrial protocol in a data packet (20) using the industrial protocol; and
the determining an asset directory (401) of the OT system (10) according to the extracted information (301) about the at least one asset (101) comprises: determining that the asset directory (401) comprises asset description information of the at least one asset (101).

4. The method according to any one of claims 1 to 3, wherein after the obtaining at least one data packet (20) transmitted in an OT system (10), the method further comprises:
determining, according to the obtained at least one data packet (20), a network connection relationship (302) of the at least one asset (101) comprised in the OT system (10); and
determining a network topology (402) of the OT system (10) according to the determined network connection relationship (302) of the at least one asset (101).

5. The method according to any one of claims 1 to 4, wherein there is a plurality of assets (101), and the method further comprises:
extracting communication information (303) of the at least one asset (101) from the obtained at least one data packet (20); and
determining an asset feature (4031) of the at least one asset (101) according to the determined communication information (303) of the at least one asset (101), and/or determining a change (4032) in an asset feature (4031) of the at least one asset in the OT system (10) according to the determined communication information (303) of the at least one asset (101).

6. The method according to any one of claims 1 to 5, wherein
the extracting, from the obtained at least one data packet (20), information (301) about at least one asset (101) comprised in the OT system (10) comprises:
classifying the obtained at least one data packet (20) according to an industrial protocol; and
for each industrial protocol used for classification, extracting operation information (304) for an involved asset (101) from a data payload of the industrial protocol in a data packet (20) using the industrial protocol; and
the method further comprises: determining an operation (404) for the OT system (10) according to the extracted operation information (304).

7. An operational technology (OT) monitoring method, comprising:
obtaining at least one data packet (20) transmitted in an OT system (10);
extracting, from the obtained at least one data packet (20), information (301) about at least one asset (101) comprised in the OT system (10); and
providing a first application programming interface (API) according to the extracted information (301) about the at least one asset (101), wherein the first API is configured to be invoked to generate an asset directory (401) of the OT system (10).

8. The method according to claim 7, wherein
the extracting, from the obtained at least one data packet (20), information (301) about at least one asset (101) comprised in the OT system (10) comprises: extracting network information of the at least one asset (101) from a transport layer header of the obtained at least one data packet (20); and
the providing a first API according to the extracted information (301) about the at least one asset (101) comprises: providing the first API (101), so that when the first API is invoked, information (30) about an asset (101) in the generated asset directory (401) of the OT system (10) comprises network information of the asset (101).

9. The method according to claim 7, wherein
the extracting, from the obtained at least one data packet (20), information (301) about at least one asset (101) comprised in the OT system (10) comprises:
classifying the obtained at least one data packet (20) according to an industrial protocol; and
for each industrial protocol used for classification, extracting asset description information of an involved asset (101) from a data payload of the industrial protocol in a data packet (20) using the industrial protocol; and
the providing a first API according to the extracted information (301) about the at least one asset (101) comprises: providing the first API (101), so that when the first API is invoked, information (30) about an asset (101) in the generated asset directory (401) of the OT system (10) comprises asset description information of the asset (101).

10. The method according to any one of claims 7 to 9, wherein after the obtaining at least one data packet (20) transmitted in an OT system (10), the method further comprises:
determining, according to the obtained at least one data packet (20), a network connection relationship (302) of the at least one asset (101) comprised in the OT system (10); and
providing a second API according to the determined network connection relationship (302) of the at least one asset (101), wherein the second API is configured to be invoked to generate a network topology (402) of the OT system (10).

11. The method according to any one of claims 7 to 10, wherein there is a plurality of assets (101), and the method further comprises:
extracting communication information (303) of the at least one asset (101) from the obtained at least one data packet (20); and
providing a third API according to the determined communication information (303) of the at least one asset (101), wherein the third API is configured to be invoked to determine:
an asset feature (4031) of the at least one asset (101) in the OT system (10), and/or
a change (4032) in an asset feature (4031) of the at least one asset (101) in the OT system (10).

12. An operational technology (OT) monitoring apparatus (112), comprising:
a data obtaining module (1121), configured to obtain at least one data packet (20) transmitted in an OT system (10);
an information extraction module (1122), configured to extract, from the at least one data packet (20) obtained by the data obtaining module (1121), information (301) about at least one asset (101) comprised in the OT system (10); and
a monitoring module (1123), configured to determine an asset directory (401) of the OT system (10) according to the information (301) about the at least one asset (101) extracted by the information extraction module (1122).

13. An operational technology (OT) monitoring apparatus (112), comprising:
a data obtaining module (1121), configured to obtain at least one data packet (20) transmitted in an OT system (10);
an information extraction module (1122), configured to extract, from the at least one data packet (20) obtained by the data obtaining module (1121), information (301) about at least one asset (101) comprised in the OT system (10); and
a monitoring module (1123), configured to provide a first application programming interface (API) according to the information (301) about the at least one asset (101) extracted by the information extraction module (1122), wherein the first API is configured to be invoked to generate an asset directory (401) of the OT system (10).

14. An operational technology (OT) monitoring apparatus (112), comprising:
at least one memory (1124), configured to store machine readable instructions; and
at least one processor (1125), configured to invoke the machine readable instructions stored in the at least one memory (1124), to perform the method according to any one of claims 1 to 11.

15. A machine readable medium, storing machine readable instructions, wherein when the machine readable instructions are invoked by at least one processor, the method according to any one of claims 1 to 11 is performed.
